# EUROPÄISCHE PATENTSCHRIFT

(11) **EP 2 885 189 B1**
(45) Veröffentlichungstag und Bekanntmachung des Hinweises auf die Patenterteilung: **28.06.2017**
(21) Anmeldenummer: 13783470.1
(22) Anmeldetag: 10.08.2013
(51) Int. Cl.: B61D 15/00, B60F 1/00, G08G 1/00, B61B 1/00

(54) **BI-MODALES VERKEHRSSYSTEM**
BI-MODAL TRAFFIC SYSTEM
SYSTÈME DE TRANSPORT BIMODAL

(30) Priorität: 15.08.2012 DE 102012107489
(43) Veröffentlichungstag der Anmeldung: 24.06.2015
(73) Patentinhaber: Friedrich, Johann, 82054 Altkirchen (DE)
(72) Erfinder: Friedrich, Johann, 82054 Altkirchen (DE)
(86) Internationale Anmeldenummer: PCT/DE2013/100289
(87) Internationale Veröffentlichungsnummer: WO 2014/026674

(56) Entgegenhaltungen:
- WO-A2-02/094589
- DE-A1- 4 431 516
- GB-A- 331 913
- US-A- 2 162 351
- US-B1- 6 324 994

## Beschreibung

### Probleme des Güterverkehrs

### a) Straßengüterverkehr

Der Straßengüterverkehr erlaubt relativ schnelle und zielreine Transporte von Tür zu Tür. Er spielt im Nah- und Regionalbereich eine marktbeherrschende und im Fernbereich eine dominante Rolle. Der Bedarf an Treibstoff und die damit verbundenen Emissionen sind beim Straßengüterverkehr jedoch höher als beim Schienengüterverkehr.

Die durchschnittliche Transportleistung von LKWs pro Zeiteinheit ist u.a. durch Vorschriften und verkehrsbedingte Behinderungen limitiert. Dadurch sind die leistungsbezogenen Transportkosten hoch. Dazu kommen hohe Kosten für die Straßen-Instandhaltung und für die dabei verursachten Staus.

### b) Schienengüterverkehr

Die durchschnittliche Transportleistung von Güter-Waggons pro Zeiteinheit ist durch die Eisenbahn-Betriebsordnung und den damit verbundenen Zwang zur Zugbildung limitiert. Es werden daher auch erheblich mehr Güter-Waggons benötigt als LKWs, um eine bestimmte Verkehrsleistung zu erbringen und dies obwohl die Nutzlast von Güter-Waggons ein Mehrfaches der Nutzlast von LKWs beträgt.

Das Schienennetz ist nicht flächendeckend, daher müssen Güter - meist mit LKWs - zur Schiene gebracht, dort umgeladen, nach dem Schienentransport wiederum umgeladen und zum Ziel transportiert werden. Dies ist zeit- und kostenaufwändig und lohnt sich - trotz des geringen Bedarfes an Traktions-Energie auf der Schiene - oft nur für Transporte im Fernbereich.

Zum Beispiel aus der WO 02/094 589 A2 ist ein solches bi-modales Verkehrssystem mit mindestens einer Verbindungsstelle mit Rampen bekannt, wobei das Wechseln vom Schienennetz ins Strassennetz oder umgekehrt eine Unterbrechung des laufenden Verkehrs erfordert.

**Aufgabe der Erfindung** ist es, durch bessere Nutzung der vorhandenen Schienen-Infrastruktur die Durchschnittsgeschwindigkeit im bodengebundenen Verkehr, insbesondere von Güterverkehr, zu erhöhen und gleichzeitig den Energiebedarf dafür deutlich zu senken.

Es wird ein bi-modales Verkehrssystem gemäss Anspruch 1 bereitgestellt, umfassend ein integriertes Wegenetz für bi-modale Fahrzeuge, insbesondere bi-modale Lastkraftwagen, wobei die bi-modalen Fahrzeuge derart ausgestaltet sind, dass sie sowohl auf Schienen als auch Straßen fahren können, wobei das integrierte Wegenetz mindestens ein Schienennetz und mindestens ein Straßennetz umfasst, wobei das mindestens eine Schienennetz und das mindestens eine Straßennetz mittels mindestens einer Verbindungsstelle miteinander gekoppelt sind. Die mindestens eine Verbindungsstelle ist derart ausgestaltet, dass bi-modale Fahrzeuge von einem Schienennetz in ein Straßennetz wechseln können und ihre Geschwindigkeit so anpassen können, dass bei einem Wechsel eines bi-modalen Fahrzeugs von dem Schienennetz in das Straßennetz der laufende Verkehr auf dem Straßennetz nicht behindert wird, und/oder bi-modale Fahrzeuge von einem Straßennetz in ein Schienennetz wechseln können und ihre Geschwindigkeit so anpassen können, dass bei einem Wechsel eines bi-modalen Fahrzeugs von dem Straßennetz in das Schienennetz der laufende Verkehr auf dem Schienennetz nicht behindert wird.

In verschiedenen Ausführungsformen wird mindestens eine Verbindungsstelle für einen Wechsel von bi-modalen Fahrzeugen von einem Schienennetz in ein Straßennetz bereitgestellt. Die Verbindungsstelle umfasst ein Straßenstück, das zwischen zwei Schienen des Schienennetzes angeordnet ist, und zumindest eins von einem Straßenstück, das rechts der zwei Schienen angeordnet ist und einem Straßenstück, das links der zwei Schienen angeordnet ist, wobei mindestens eines von dem rechts oder links angeordneten Straßenstücken mit einer Straße verbunden ist. Die Straßenstücke verlaufen entlang der Schienen und sind derart ausgestaltet, dass die Fahrbahnen der Straßenstücke zunächst unterhalb einer Schienenoberkante verlaufen, so dass Straßenräder von bi-modaler Fahrzeuge die Fahrbahnen nicht berühren, und die Fahrbahnen der Straßenstücke anschließend stetig auf die Höhe der Schienenoberkante ansteigen, so dass die Straßenräder nach und nach in Kontakt mit den Fahrbahnen treten, wodurch die Schienenräder von den Schienen abgehoben werden, die Straßenräder die Spurführung von den Schienenrädern übernehmen, die Fahrbahnen der Straßenstücke und die Schienenoberkanten eine durchgängige Fahrbahn bilden und die bi-modalen Fahrzeuge auf die Straße wechseln können.

In verschiedenen Ausführungsformen wird mindestens eine Verbindungsstelle für einen Wechsel von bi-modalen Fahrzeugen von einem Straßennetz in ein Schienennetz bereitgestellt. Die Verbindungsstelle umfasst ein Straßenstück, das zwischen zwei Schienen des Schienennetzes angeordnet ist, und zumindest eins von einem Straßenstück, das rechts der zwei Schienen angeordnet ist und einem Straßenstück, das links der zwei Schienen angeordnet ist, wobei mindestens eines von dem rechts oder links angeordneten Straßenstücken mit einer Straße verbunden ist. Die Straßenstücke verlaufen entlang den Schienen und sind derart ausgestaltet, dass die Fahrbahnen der Straßenstücke zunächst auf Höhe der Schienenoberkante verlaufen, so dass die Fahrbahnen der Straßenstücke und die Schienenoberkanten eine durchgängige Fahrbahn bilden, und die Schienenräder von bi-modalen Fahrzeuge die Fahrbahnen nicht berühren und, die Fahrbahnen der Straßenstücke anschließend stetig unterhalb der Schienenoberkante abfallen, so dass die Schienenräder nach und nach in Kontakt mit den Schienen treten, wodurch die Schienenräder die Spurführung von den Straßenrädern übernehmen, die Straßenräder komplett von den Fahrbahnen abgehoben werden, und die bi-modalen Fahrzeuge auf die Schiene wechseln.

In verschiedenen Ausführungsformen wird ein mindestens einen Wechselbereich, auch Weichenbereich genannt, bereitgestellt. Der mindestens einen Wechselbereich umfasst ein Straßenstück, das zwischen zwei Schienen des Schienennetztes angeordnet ist und zumindest eins von einem Straßenstück, das rechts der zwei Schienen angeordnet ist und einem Straßenstück, das links der zwei Schienen angeordnet ist. Die Straßenstücke verlaufen entlang den Schienen und weisen einen ersten Abschnitt auf, in dem die Fahrbahnen der Straßenstücke zunächst unterhalb einer Schienenoberkante verlaufen, so dass Straßenräder bi-modaler Fahrzeuge die Fahrbahnen nicht berühren, und die Fahrbahnen der Straßenstücke anschließend stetig auf die Höhe der Schienenoberkante ansteigen, so dass Straßenräder bi-modaler Fahrzeuge nach und nach in Kontakt mit den Fahrbahnen treten, wodurch die Schienenräder bi-modaler Fahrzeuge von den Schienen abgehoben werden und die Straßenräder bi-modaler Fahrzeuge die Spurführung von den Schienenrädern der bi-modalen Fahrzeuge übernehmen. Die Straßenstücke weisen weiter einen zweiten Abschnitt auf, in dem die Fahrbahnen der Straßenstücke auf Höhe der Schienenoberkante verlaufen, so dass die Fahrbahnen der Straßenstücke und die Schienenoberkanten eine durchgängige Fahrbahn bilden, auf der Fahrzeuge, wie zum Beispiel bi-modale Fahrzeuge, die Schiene überqueren können und ihre Richtung von der Richtung der Schienen, zum Beispiel in Richtung einer weiteren Schiene, wechseln können. Die Straßenstücke weisen ferner einen einen dritten Abschnitt auf, in dem die Fahrbahnen der Straßenstücke zunächst auf Höhe der Schienenoberkante verlaufen, so dass Schienenräder bi-modaler Fahrzeuge die Fahrbahnen nicht berühren und die Fahrbahnen der Straßenstücke anschließend stetig unterhalb der Schienenoberkante abfallen, so dass die Schienenräder nach und nach in Kontakt mit den Schienen treten, wodurch die Schienenräder die Spurführung von den Straßenrädern übernehmen, die Straßenräder von den Fahrbahnen abgehoben werden, und die bi-modalen Fahrzeuge auf die Schiene wechseln, wobei der erste Abschnitt nahtlos mit dem zweiten Abschnitt und der zweite Abschnitt nahtlos mit dem dritten Abschnitt verbunden ist.

In verschiedenen Ausführungsformen wird ein Positioniersystem, zum Beispiel ein Lenkrad oder Führungssystem, mit dem das bi-modale Fahrzeug so auf der durchgängigen Fahrbahn über den Schienen positioniert wird, dass nach Absenken der Fahrbahnen der Straßenstücke die Schienenräder auf den Schienen landen, bereitgestellt.

In verschiedenen Ausführungsformen werden bi-modale Fahrzeuge für Fahrten auf der Schiene und für Fahrten auf der Straße bereitgestellt. In verschiedenen Ausführungsformen weisen die bi-modalen Fahrzeuge für Fahrten auf der Schiene Schienenräder und für Fahrten auf der Straße Straßenräder auf, wobei die Schienenräder und die Straßenräder so angetrieben sind, dass sie die gleiche Umfangsgeschwindigkeit aufweisen.

In verschiedenen Ausführungsformen sind die bi-modalen Fahrzeuge so ausgestaltet, dass die Schienenräder bei einer Fahrt auf der Straße die Fahrbahn nicht berühren, zum Beispiel indem Achsen von Schienenrädern einen größeren Abstand zur Fahrbahn haben als Achsen von Straßenrädern, oder zum Beispiel indem die Schienenräder einen kleineren Durchmesser als die Straßenräder aufweisen, oder beides, und die Straßenräder bei einer Fahrt auf der Schiene die Schienen nicht berühren, zum Beispiel indem sie einen Durchmesser aufweisen, der klein genug ist, so dass die Straßenräder die Schienen oder Befestigungsteile der Schienen nicht berühren.

In verschiedenen Ausführungsformen sind die bi-modalen Fahrzeuge so ausgestaltet, dass die Spurweite der Schienenräder an die Spurweite eines jeweiligen Schienennetzes angepasst werden kann, insbesondere durch axiales Verschieben und anschließendes Fixieren der Schienenräder auf Achsen, an denen die Schienenräder befestigt sind, zum Beispiel während sich das bi-modale Fahrzeug auf einer Straße befindet oder bewegt.

In verschiedenen Ausführungsformen weisen die bi-modalen Fahrzeuge einen Antriebsstrang auf, mit dem sie Schienenräder und Straßenräder gemeinsam antreiben können.

In verschiedenen Ausführungsformen weisen die bi-modalen Fahrzeuge einen Antrieb auf, der auf elektrifizierten Strecken des Schienennetzes mit Traktionsstrom, zum Beispiel über Schleifkontakte, betrieben wird und auf nicht-elektrifizierten Strecken des Schienennetzes und auf Straßen mit mobiler Energie, wie zum Beispiel einer Batterie, einem Akkumulator, einer Brennstoffzelle oder Diesel, betrieben wird, wobei die Leistung des Antriebs bei einem Wechsel des Betriebs mit Traktionsstrom und mobiler Energie, zum Beispiel im Bereich von Verbindungsstellen oder Wechselbereichen, manuell oder automatisch, konstant gehalten wird.

In verschiedenen Ausführungsformen weisen die bi-modalen Fahrzeuge für die Fahrzeugführung an Verbindungsstellen und Wechselbereichen neben einer manuellen Fahrzeugführung, zum Beispiel per Lenkrad, zusätzlich ein erstes und ein zweites Spurführungssystem, die zum Beispiel optisch oder mechanisch sind, auf, wobei das erste Spurführungssystem einer ersten Führungsmarkierung, die sich auf einer ersten Seite, zum Beispiel der linken Seite, des bi-modalen Fahrzeugs befindet, folgt und das zweite Spurführungssystem einer zweiten Führungsmarkierung, die sich auf einer zweiten Seite, zum Beispiel der rechten Seite, des bi-modalen Fahrzeugs befindet, folgt.

In verschiedenen Ausführungsformen werden das erste und das zweite Spurführungssystem vor Erreichen einer Verbindungsstelle oder eines Wechselbereichs beide aktiviert, wobei bei einem Richtungswechsel auf die erste Seite das erste Spurführungssystem aktiviert wird und das zweite Spurführungssystem bis nach dem Richtungswechsel deaktiviert wird, und wobei bei einem Richtungswechsel auf die zweite Seite das zweite Spurführungssystem aktiviert wird und das erste Spurführungssystem bis nach dem Richtungswechsel deaktiviert wird.

In verschiedenen Ausführungsformen erfolgt die Aktivierung und Deaktivierung des ersten und zweiten Spurführungssystems manuell, zum Beispiel durch Betätigung des Blinkers oder Lenkrads, oder automatisch, zum Beispiel durch ein Navigationsgerät.

In verschiedenen Ausführungsformen wird ein Verkehrsleit- und Sicherungs-System bereitgestellt. An das Verkehrsleit- und Sicherungs-System wird mindestens eins von einer Identität, einer Position, einer Geschwindigkeit, und einer Geschwindigkeitsänderung von bi-modalen Fahrzeugen in regelmäßigen Abständen oder auf Abfrage übermittelt, wobei das Verkehrsleit- und Sicherungs-System eingerichtet ist, mindestens eins von einem Sicherheitsabstand, eine Geschwindigkeitsdifferenz, und eine Geschwindigkeitsdifferenzveränderung von einem bi-modalen Fahrzeug zu einem vorausfahrenden oder einem hinterher fahrenden Fahrzeug zu ermitteln und dies an das bi-modale Fahrzeug übermittelt.

Es wird weiter ein Verfahren gemäss Anspruch 12 zum Koppeln oder Verbinden eines Schienennetzes und eines Straßennetzes, so dass Fahrzeuge mit Schienenrädern und Straßenrädern, zum Beispiel ein bi-modales Fahrzeug, zwischen dem Schienennetz und dem Straßennetz wechseln können, bereitgestellt. Das Verfahren umfasst das Vorsehen oder Bereitstellen von Straßenstücken, die entlang, zum Beispiel parallel, zu Schienen des Schienennetzes verlaufen und auf die das Fahrzeug mit Straßenrädern fahren kann, das stetiges Anheben der Fahrbahnen der Straßenstücke, so dass bei einer Fahrt auf der Schiene allmählich die Last des Fahrzeugs von den Schienenrädern auf die Straßenräder übergeht, und das stetiges Absenken der Fahrbahnen der Straßenstücke, so dass bei einer Fahrt auf den Straßenstücken allmählich die Last des Fahrzeugs von den Straßenrädern auf die Schienenräder übergeht.

In verschiedenen Ausführungsformen werden die Fahrbahnen der Straßenstücke soweit angehoben werden und so ausgestaltet, dass eine durchgängige Fahrbahn aus Fahrbahnen von Straßenstücken und Schienenoberkanten entsteht.

In verschiedenen Ausführungsformen platziert sich das Fahrzeug auf der durchgängigen Fahrbahn so über den Schienen, so dass es, wenn die Fahrbahnen der Straßenstücke abgesenkt werden, mit den Schienenrädern auf den Schienen fährt.

In verschiedenen Ausführungsformen kann das Fahrzeug die Schienen auf der durchgängigen Fahrbahn überqueren.

In verschiedenen Ausführungsformen werden die Fahrbahnen der Straßenstücke soweit abgesenkt, dass die Straßenräder nicht mehr in Kontakt mit den Straßenstücken sind.

In verschiedenen Ausführungsformen wird eine Spurweite der Schienenräder an eine Spurweite des Schienennetzes angepasst, zum Beispiel durch axiales Verschieben und anschließendes Fixieren der Schienenräder, wobei die Anpassung zum Beispiel während der Fahrt auf der Straße oder während sich das Fahrzeug auf einer Straße befindet, stattfindet.

### Ausführliche Beschreibung

Ein bi-modales Verkehrssystem kann folgende Elemente umfassen:
- ein integriertes Wegenetz aus Schiene und Straße,
- bi-modale Fahrzeuge, die sich auf Schienenrädern bzw. Straßenrädern autonom, sicher und non-Stopp auf den verschiedenen Abschnitten des integrierten Wegenetzes bewegen können,
- ein geeignetes Verkehrsleit- und Sicherungs-System.

### Integriertes Wegenetz

Schienen- und Straßen-Netze sind bei einem integrierten Wegenetz, auch bi-modales Wegenetz genannt, an geeigneten Anschluss-Stellen - nach dem Vorbild der Autobahn - durch Beschleunigungs- und Verzögerungs-Strecken so verbunden, dass dort bi-modale Fahrzeuge von der Straße auf die Schiene und von der Schiene auf die Straße wechseln können.

Ihre Geschwindigkeit kann auf den Beschleunigungs- bzw. Verzögerungs-Strecken an die jeweils erforderliche Geschwindigkeit auf Schiene bzw. Straße angepasst werden. Dadurch wird der laufende Verkehr beim Wechsel zwischen Straße und Schiene nicht behindert.

### Anschluss-Stellen/Verbindungsstellen

Für die Zu- und Ausfahrten an Anschluss-Stellen, auch Verbindungsstellen genannt, sind zwischen Straße und Schiene Straßen-Fahrbahnen auf Höhe der Schienenoberkante bis in den Gleisbereich verlegt.

Bei Zufahrten können bi-modale Fahrzeuge dadurch im Straßen-Modus bis in den Gleisbereich fahren und dort mit bekannten optischen, elektronischen, mechanischen und/oder manuellen Führungseinrichtungen, wie zum Beispiel Spurhalteassistenten und Fahrspurerkennung, genau über den Schienen positioniert werden. Dann wird die Fahrbahn so abgesenkt, dass die Schienenräder sicher die Spurführung von den Straßenrädern übernehmen können und die Fahrt im Schienen-Modus fortgesetzt werden kann.

Bei Ausfahrten werden vorAnschluss-Stellen jeweils Fahrbahnen im Gleisbereich so unterhalb der Schienen-Oberkante verlegt, dass die Straßenräder bi-modaler Fahrzeuge die Fahrbahn zunächst nicht berühren. Dann steigt die Fahrbahn langsam auf die Höhe der Schienen-Oberkante an. Dadurch übernehmen die Straßenräder nach und nach die Spurführung von den Schienenrädern. Diese werden von den Schienen abgehoben und die bi-modalen Fahrzeuge können im Straßen-Modus von der Schiene auf die Straße wechseln.

### Weichen-Bereiche/Wechselbereiche

Vor Weichen-Bereichen, auch Wechselbereiche genannt, wechseln bi-modale Fahrzeuge vom Schienen-Modus in den Straßen-Modus, durchfahren diese Bereiche kontrolliert im Straßen-Modus und wechseln danach wieder in den Schienen-Modus. Im Straßen-Modus sind sie bei der Wahl des Weges autonom und von der Stellung der Weichen unabhängig.

Für den Wechsel vom Schienen-Modus in den Straßen-Modus ist vor Weichen-Bereichen jeweils eine Fahrbahn so verlegt, dass die Straßenräder die Fahrbahn zunächst nicht berühren. Dann steigt die Fahrbahn langsam auf die Höhe der Schienen-Oberkante an und die Straßenräder übernehmen nach und nach die Spurführung von den Schienenrädern, diese werden dabei von den Gleisen abgehoben.

Nach Durchfahrt eines Weichenbereiches wird die Fahrbahn so abgesenkt, dass die Schienenräder wieder Kontakt mit der Schiene erhalten und die Spurführung von den Straßenrädern übernehmen können, danach endet die Fahrbahn.

### Topologie

Das Schienennetz ist - wie eine Autobahn - frei von Kreuzungen und Haltestellen: Kreuzungen sind durch Ein- und Ausfädelungen ersetzt. Haltestellen liegen - wie Parkplätze an Autobahnen - neben den Fahrbahnen. Dadurch wird eine hohe Durchschnittsgeschwindigkeit ohne gegenseitige Behinderung der Fahrzeuge sichergestellt.

Es gilt strikter Einrichtungsverkehr, d.h. für jede Fahrtrichtung ist mindestens ein Gleis vorgesehen, an Haltestellen sind es mindestens zwei mit entsprechenden Beschleunigungs- und Verzögerungs-Strecken.

### Bi-modale Fahrzeuge

### Fahrwerk

Bi-modale Fahrzeuge sind Straßen-Fahrzeuge, die für Fahrten auf der Schiene Schienenräder und für Fahrten auf der Straße Straßenräder besitzen. Die Schienenräder drehen sich mit der gleichen Umfangsgeschwindigkeit wie die Straßenräder damit der Wechsel zwischen Straßen- und Schienen-Modus ohne Stöße erfolgen kann und kein unnötiger Verschleiß auftritt.

Die Achsen der Schienenräder sind relativ zu den Achsen der Straßenräder so positioniert, dass die Schienenräder im Straßenmodus ausreichend Bodenfreiheit besitzen. Jedoch nicht so viel, dass sie im Schienenmodus nicht auf der Schienen-Oberkante aufsetzen können.

Die Spurweiten der Schienenräder entsprechen den Erfordernissen der jeweiligen Gleisanlagen. Sie können - falls erforderlich - so verändert werden, dass Fahrten auf Schmalspur, Normalspur und Breitspur möglich sind. Die Spurweite der Straßenräder ist so gewählt, dass ihre Reifen im Schienen-Modus die Gleisoberkante nicht berühren.

### Antrieb

Bi-modale Fahrzeuge besitzen einen Antriebsstrang mit dem sie Schienenräder und Straßenräder gemeinsam antreiben können. Im Schienen-Modus benutzen bi-modale Fahrzeuge auf elektrifizierten Streckenabschnitten bevorzugt Traktionsstrom als Energiequelle (Elektroantrieb).

Bei einem Wechsel in den Straßen-Modus z.B. in einem Weichenbereich ist jedoch durch das Abheben der Schienenräder der Stromkreis unterbrochen und daher kein Traktionsstrom verfügbar. Es muss dann auf Dieselantrieb umgeschaltet werden, wenn nicht mittels eines Schleifkontaktes auf der Schiene der Stromkreis geschlossen oder Energie aus einem Akkumulator bereitgestellt werden kann.

### Spurführung

In den Bereichen von Anschluss-Stellen und von Weichen wechseln bi-modale Fahrzeuge automatisch zwischen Straßen- und Schienen-Modus damit sie unabhängig von der aktuellen Weichenstellung diese Bereiche autonom durchfahren können.

Im Straßen-Modus sind die Spurkränze der Schienen-Räder nicht in Kontakt mit der Schiene. Um eine genaue Positionierung des Fahrzeugs über den Schienen und damit einen sicheren Übergang zwischen Straße und Schiene zu gewährleisten, ist zur Unterstützung des Fahrers zusätzlich für jede Fahrzeugseite mindestens eines der bekannten elektronischen und mechanischen Führungssysteme vorgesehen.

Bei Abzweigungen werden die Spurführungssysteme für die Fahrzeugseite des Abzweigs benutzt und die für die andere Fahrzeugseite abgeschaltet. Bei einer Abzweigung z.B. nach rechts werden also die Spurführungssysteme für die linke Seite abgeschaltet. Nach der Abzweigung werden sie wieder zugeschaltet.

Die An- und Abschaltung der Spurführungssysteme wird manuell z.B. durch Betätigung des Blinkers oder des Lenkrads durch den Fahrer gesteuert oder automatisch z.B. durch ein Navigationsgerät.

### Verkehrsleit- und Sicherungs-System

### Sicherheits-Prinzip

Beim klassischen Schienenverkehr tragen zentrale Leitstellen die Verantwortung für Sicherheit und Navigation der Schienenfahrten. Dadurch beträgt der zeitliche Sicherheitsabstand zwischen den einzelnen Schienenfahrten mehrere Minuten. Dies beschränkt die Zahl der pro Zeiteinheit auf der Schiene möglichen Fahrten und damit die Möglichkeit, Straßengüterverkehr in größerem Umfang auf die Schiene zu verlagern.

In einem bi-modalen Güterverkehrssystem ist die Verantwortung für Sicherheit und Navigation von Schienenfahrten - wie im Straßenverkehr - an die Führer der Fahrzeuge delegiert (Prinzip der Subsidiarität). Dadurch ist die Reaktionszeit des Fahrers maßgeblich für den erforderlichen zeitlichen Sicherheitsabstand, diese beträgt normalerweise weniger als zwei Sekunden. Die Kapazität eines Gleises entspricht dann der einer einspurigen Fernstraße und es können genügend viele Slots für einfädelnde Verkehrsteilnehmer freigehalten werden.

Wird ein Abstands-Tempomat eingesetzt, so lässt sich die Reaktionszeit verringern und die Gleis-Kapazität entsprechend weiter erhöhen.

### Bremsweg

Der Bremsweg ist auf der Schiene deutlich länger als auf der Straße. Bei SchienenFahrzeugen, die mit Sichtkontakt im zeitlichen Sicherheitsabstand hintereinander fahren, ist dies kein Problem, wenn das vorausfahrende Fahrzeug nicht stärker bremsen kann, als das nachfolgende. Dieses kann dann seine Geschwindigkeit stets so anpassen, dass ein Auffahrunfall vermieden wird.

Besteht kein Sichtkontakt zu einem vorausfahrenden Fahrzeug, kann aus Sicherheitsgründen nur so schnell gefahren werden, dass der erforderliche Bremsweg die jeweilige Sichtweite nicht überschreitet. Dies ist unbefriedigend wenn hohe Durchschnittsgeschwindigkeiten angestrebt werden und die Sichtbedingungen schlecht sind.

Bei Fahrten mit hoher Geschwindigkeit ohne Sichtkontakt zu einem vorausfahrenden Fahrzeug muss daher auf andere Weise dafür gesorgt werden, dass eine kritische Geschwindigkeitsdifferenz zwischen zwei einander folgenden Fahrzeugen sicher erkannt und abgebaut werden kann.

In einem bi-modalen Verkehrssystem meldet jedes Fahrzeug kooperativ in bekannter Weise automatisch in kurzen zeitlichen Abständen seine Identität, Position und Geschwindigkeit. Aus diesen Daten und den entsprechenden Daten des eigenen Fahrzeugs kann die aktuelle Geschwindigkeitsdifferenz eines Fahrzeugs zu einem vorausfahrenden Fahrzeug sowie ihre Veränderung ermittelt und dem Fahrzeugführer angezeigt werden. Dieser kann sodann die Geschwindigkeit seines Fahrzeugs der des vorausfahrenden Fahrzeugs entsprechend anpassen und einen Auffahrunfall sicher vermeiden. Hierbei kann er durch einen geeigneten Abstands-Tempomat unterstützt werden.

Aus Sicherheitsgründen werden die Daten der Fahrzeuge nicht nur dezentral in den einzelnen Fahrzeugen ausgewertet, sondern auch in einer Verkehrs-Zentrale. Drohende Unterschreitungen des Bremsabstandes zwischen zwei Fahrzeugen werden dort festgestellt und die betroffenen Fahrer entsprechend gewarnt.

### Verkehrsfluß

In einem bi-modalen Güterverkehrssystem wird ein flüssiger Verkehrsablauf dadurch erreicht, dass jeder Fahrer vor Beginn einer Fahrt sein Ziel z.B. über ein Navigationsgerät an einen Verkehrsflussrechner übermittelt. Dieser berechnet die optimale Route, erstellt einen konfliktfreien Fahrplan, übermittelt diesen an das Navigationsgerät und gibt die Fahrt frei.

Das Navigationsgerät zeigt dem Fahrer den freigegebenen Soll-Fahrplan nach Ort und Zeit an und zusätzlich die Ist-Position seines Fahrzeugs. Durch einen Vergleich von Soll und Ist kann der Fahrer seine Fahrt damit stets so einrichten, dass er dem Sollfahrplan möglichst genau folgt. Dies kann zu seiner Entlastung auch mit Hilfe eines Fahrt-Management-Systems erfolgen.

Zusätzlich werden entlang der Strecke mit geeigneten Sensoren die Daten vorbeifahrender Fahrzeuge erfasst und in einer Verkehrs-Zentrale gespeichert. Damit kann der Fahrtverlauf bi-modaler Fahrzeuge erfasst und mit dem freigegebenen Fahrplan verglichen werden. Bei Planabweichungen, die für einen ungestörten Verkehrsfluss kritisch sind, greift die Zentrale ein, indem sie die betroffenen Fahrer entsprechend warnt und gegebenenfalls Fahrpläne so modifiziert, dass ein stetiger Verkehrsfluss erhalten bleibt.
1. **Bi-modales Güterverkehrssystem** dadurch gekennzeichnet, dass es aus einem integrierten Wegenetz, bi-modalen Fahrzeugen und einem geeigneten Verkehrsleit- und Sicherungs-System besteht.
2. **Integriertes Wegenetz** dadurch gekennzeichnet, dass Schienen- und Straßennetze an geeigneten Anschluss-Stellen - nach dem Vorbild der Autobahn - so durch Beschleunigungs- und Verzögerungsstrecken miteinander verbunden sind, dass dort bi-modale Fahrzeuge von der Straße auf die Schiene und von der Schiene auf die Straße wechseln können und dabei ihre Geschwindigkeit so anpassen können, dass der laufende Verkehr auf der Schiene bzw. auf der Straße nicht behindert wird.
   2.1 Integriertes Wegenetz nach Pkt. 2 dadurch gekennzeichnet, dass bei Anschluss-Stellen durchgängige Straßen-Fahrbahnen so verlegt sind, dass bi-modale Fahrzeuge im Straßenmodus autonom durch den Bereich derAnschluss-Stelle fahren können.
   2.2 Integriertes Wegenetz nach Pkt. 2 dadurch gekennzeichnet, dass für die Zu- und Ausfahrten an Anschluss-Stellen zwischen Straße und Schiene Straßen-Fahrbahnen auf Höhe der Schienenoberkante bis in den Gleisbereich verlegt sind.
   2.3 Integriertes Wegenetz nach Pkt. 2.2 dadurch gekennzeichnet, dass auf Zufahrtsstrecken an Anschluss-Stellen bi-modale Fahrzeuge im Straßen-Modus ohne weiteres Schienen überqueren, in den Gleisbereich einfahren und manuell per Lenkrad oder mit Fahrerassistenz-Systemen so über den Schienen positioniert werden können, dass nach Absenken der Zufahrtsstrecke die Schienenräder sicher die Spurführung von den Straßenrädern übernehmen können und die Fahrt im Schienen-Modus fortgesetzt werden kann.
   2.4 Integriertes Wegenetz nach Pkt. 2.2 dadurch gekennzeichnet, dass vor Ausfahrten an Anschluss-Stellen jeweils Fahrbahnen im Gleisbereich so unterhalb der Schienen-Oberkante verlegt sind, dass die Straßenräder bi-modaler Fahrzeuge die Fahrbahn zunächst nicht berühren und, dass danach die Fahrbahn langsam auf die Höhe der Schienen-Oberkante ansteigt. Dadurch übernehmen die Straßenräder nach und nach die Spurführung von den Schienenrädern. Diese werden von den Schienen komplett abgehoben und die bi-modalen Fahrzeuge können im Straßen-Modus von der Schiene auf die Straße wechseln.
   2.5 Integriertes Wegenetz nach Pkt. 2 dadurch gekennzeichnet, dass bei Weichen-Bereichen durchgängige Straßen-Fahrbahnen so verlegt sind, dass bi-modale Fahrzeuge im Straßenmodus autonom ihren Weg durch den Weichenbereich wählen können.
   2.6 Integriertes Wegenetz nach Pkt. 2.5 dadurch gekennzeichnet, dass vor Weichen-Bereichen diese Straßen-Fahrbahnen so verlegt sind, dass die Straßenräder bi-modaler Fahrzeuge diese Fahrbahnen zunächst nicht berühren und dass diese dann langsam auf die Höhe der Schienen-Oberkante so ansteigen, dass die Straßenräder die Spurführung von den Schienenrädern übernehmen können.
   2.7 Integriertes Wegenetz nach Pkt. 2.5 dadurch gekennzeichnet, dass nach Weichen-Bereichen die durchgängigen Straßen-Fahrbahnen stetig abgesenkt werden.
   2.8 Integriertes Wegenetz nach Pkt. 2.5 dadurch gekennzeichnet, dass nach Weichen-Bereichen die durchgängigen Straßen-Fahrbahnen in einem ersten Abschnitt stetig so abgesenkt werden, dass zunächst die Spurkränze der Schienenräder Kontakt mit der Schiene erhalten und das Fahrzeug präzise über den Schienen ausgerichtet wird.
   2.9 Integriertes Wegenetz nach Pkt. 2.5 dadurch gekennzeichnet, dass hinter Weichen-Bereichen die durchgängigen Straßen-Fahrbahnen in einem zweiten Abschnitt stetig weiter so abgesenkt werden, dass die Schienenräder auf der Schienenoberkante aufsetzen, die Führungsfunktion der Straßenräder völlig übernehmen und die Fahrzeuge ihre Fahrt im Schienen-Modus fortsetzen können.
   2.10 Integriertes Wegenetz nach Pkt. 2 dadurch gekennzeichnet, dass zur Erzielung einer hohen Durchschnittsgeschwindigkeit Kreuzungen durch Ein- und Ausfädelungen wie an Anschluss-Stellen ersetzt sind, Haltestellen neben den Durchfahrts-Fahrbahnen liegen und mit entsprechenden Beschleunigungs- und Verzögerungs-Strecken versehen sind.
   2.11. Integriertes Wegenetz nach Pkt. 10 dadurch gekennzeichnet, dass es sich bei den Durchfahrts-Fahrbahnen neben Haltestellen um Straßenfahrbahnen handelt, welche bi-modale Fahrzeuge wie bei Anschluss-Stellen im Straßen-Modus nutzen können.
   2.12 Integriertes Wegenetz nach Pkt. 2 dadurch gekennzeichnet, dass zur Erzielung eines hohen Fahrzeug-Durchsatzes und hoher Sicherheit strikter Einbahnverkehr gilt und für jede Fahrtrichtung ein eigenes Gleis vorgesehen ist.
3. **Bi-modale Fahrzeuge** dadurch gekennzeichnet, dass sie für Fahrten auf der Schiene Schienenräder (Schienen-Modus) und für Fahrten auf der Straße Straßenräder (Straßen-Modus) besitzen.
   3.1 Bi-modale Fahrzeuge nach Pkt. 3, dadurch gekennzeichnet, dass Schienenräder und Straßenräder mit gleicher Umfangsgeschwindigkeit rotieren.
   3.2 Bi-modale Fahrzeuge nach Pkt. 3, dadurch gekennzeichnet, dass die Schienenräder relativ zu den Straßenrädern so positioniert sind, dass sie im Straßenmodus ausreichend Bodenfreiheit besitzen und im Schienenmodus auf der Schienen-Oberkante aufsetzen können.
   3.3 Bi-modale Fahrzeuge nach Pkt. 3.2, dadurch gekennzeichnet, dass im Straßen-Modus die Spurweite ihrer Schienenräder an die jeweiligen Gleisanlagen leicht durch Verschieben auf ihren Achsen und entsprechende Fixierungen angepasst werden kann.
   3.4 Bi-modale Fahrzeuge nach Pkt. 3, dadurch gekennzeichnet, dass sie einen Antriebsstrang besitzen, mit dem sie Schienenräder und Straßenräder gemeinsam antreiben können.
   3.5 Bi-modale Fahrzeuge nach Pkt. 3.4, dadurch gekennzeichnet, dass sie über einen Antrieb verfügen, der es ihnen gestattet, im Schienen-Modus auf elektrifizierten Schienenstrecken in bekannter Weise Traktionsstrom (Elektroantrieb) und auf nicht elektrifizierten Strecken sowie auf Straßen Diesel als Energiequelle zu nutzen (Dieselantrieb).
   3.6 Bi-modale Fahrzeuge nach Pkt. 3.5, dadurch gekennzeichnet, dass der Wechsel zwischen Elektro- und Dieselantrieb manuell oder über einen geeigneten Leistungsregler so erfolgt, dass die gemeinsame Leistung von Dieselmotor und Elektromotor konstant bleibt.
   3.7 Bi-modale Fahrzeuge nach Pkt. 3.6 dadurch gekennzeichnet, dass auf elektrifizierten Strecken ein kurzzeitiger Wechsel zwischen Elektro- und Diesel-Antrieb z.B. im Bereich von Anschluss-Stellen oder Weichen dadurch vermieden wird, dass im Straßen-Modus mittels eines Schleifkontaktes auf der Schiene der Traktions-Stromkreis geschlossen bleibt oder elektrische Energie aus einem Akkumulator bzw. einer Brennstoffzelle bereitgestellt wird.
   3.8 Bi-modale Fahrzeuge nach Pkt. 3 dadurch gekennzeichnet, dass sie für das sichere Auf- und Abgleisen an Anschluss-Stellen und an Weichenbereichen neben der Möglichkeit der manuellen Fahrzeugführung per Lenkrad zusätzlich für jede Fahrzeugseite mindestens eines der bekannten elektronischen und mechanischen Spurführungssysteme besitzen.
   3.9 Bi-modale Fahrzeuge nach Pkt. 3.8 dadurch gekennzeichnet, dass die Spurführungssysteme im Schienenbereich stets gemeinsam im Einsatz sind, jedoch bei Abzweigungen wechselseitig an- und abgeschaltet werden können, und zwar so, dass bei einer Abzweigung z.B. nach rechts grundsätzlich die Spurführungssysteme für die rechte Seite benutzt und jene für die linke Seite abgeschaltet werden. Nach der Abzweigung werden diese wieder zugeschaltet.
   3.10 Bi-modale Fahrzeuge nach Pkt. 3.9 dadurch gekennzeichnet, dass die An- und Abschaltung der Spurführungssysteme manuell z.B. durch Betätigung des Blinkers oder Lenkrads gesteuert wird oder automatisch z.B. durch ein Navigationsgerät.
4. **Verkehrsleit- und Sicherungs-System** für bi-modale Fahrzeuge dadurch gekennzeichnet, dass die Verantwortung für Sicherheit und Navigation von Schienenfahrten - wie im Straßenverkehr - an die Führer der Fahrzeuge delegiert wird (Prinzip der Subsidiarität).
   4.1 Verkehrsleit- und Sicherungs-System nach Pkt. 4 dadurch gekennzeichnet, dass bi-modale Fahrzeuge - auf bekannte Weise - ihre Identität, Position und Geschwindigkeit in regelmäßigen Abständen oder auf Abfrage automatisch melden.
   4.2 Verkehrsleit- und Sicherungs-System nach Pkt. 4.1 dadurch gekennzeichnet, dass für jedes bi-modale Fahrzeug aus obigen Meldungen die aktuelle Geschwindigkeitsdifferenz und ihre Veränderung zu einem vorausfahrenden und einem hinterher fahrenden Fahrzeug ermittelt und dem Fahrer so angezeigt wird, dass er die Geschwindigkeit seines Fahrzeugs so anpassen kann, dass er einen aktiven oder passiven Auffahrunfall vermeiden und an Anschluss-Stellen sein Fahrzeug sicher in den fließenden Verkehr einfädeln und diesen auch wieder sicher verlassen kann.
   4.3 Verkehrsleit- und Sicherungs-System nach Pkt. 4 dadurch gekennzeichnet, dass die Fahrtdaten bi-modaler Fahrzeuge - auf bekannte Weise - von Sensoren an der Strecke erfasst und zentral gespeichert werden.
   4.4 Verkehrsleit- und Sicherungs-System nach Pkt. 4.1 und Punkt 4.3 dadurch gekennzeichnet, dass in einer Verkehrs-Zentrale für jedes bi-modale Fahrzeug aus obigen Meldungen drohende Unterschreitungen des erforderlichen Sicherheitsabstandes zwischen zwei Fahrzeugen festgestellt und die betroffenen Fahrer entsprechend gewarnt werden.
   4.5 Verkehrsleit- und Sicherungs-System nach Pkt. 4.1 dadurch gekennzeichnet, dass vor jeder Fahrt eines bi-modalen Fahrzeugs das Ziel über ein entsprechendes Navigationsgerät an einen Verkehrsflussrechner übermittelt wird. Dieser berechnet die optimale Route, erstellt einen konfliktfreien Fahrplan, übermittelt diesen an das Navigationsgerät und gibt die Fahrt frei.
   4.6 Verkehrsleit- und Sicherungs-System nach Pkt. 4.1 dadurch gekennzeichnet, dass das Navigationsgerät dem Fahrer den freigegebenen Soll-Fahrplan nach Ort und Zeit zusammen mit der Ist-Position seines Fahrzeugs anzeigt.
   4.7 Verkehrsleit- und Sicherungs-System nach Pkt. 4.6 dadurch gekennzeichnet, dass durch einen Vergleich von Soll- und Ist-Fahrtverlauf der Fahrer seine Fahrt stets so einrichten kann, dass er dem Sollfahrplan möglichst sekundengenau folgen und dazu auch ein geeignetes Fahrt-Management-System verwenden kann.
   4.8 Verkehrsleit- und Sicherungs-System nach Pkt. 4.5 dadurch gekennzeichnet, dass der Fahrtverlauf jedes bi-modalen Fahrzeugs - an Hand der Meldungen gemäß Pkt. 4.1 und Pkt. 4.3 - in einer Verkehrs-Zentrale mit dem freigegebenen Fahrplan verglichen werden und bei Planabweichungen, die für einen ungestörten Verkehrsfluss kritisch sind, die betroffenen Fahrer entsprechend gewarnt und Fahrpläne gegebenenfalls modifiziert werden können.

## Patentansprüche

1. Bi-modales Verkehrssystem, umfassend:
ein integriertes Wegenetz für bi-modale Fahrzeuge, insbesondere bi-modale Lastkraftwagen.
- wobei die bi-modalen Fahrzeuge derart ausgestaltet sind, dass sie sowohl auf Schienen als auch Straßen fahren können,
- wobei das integrierte Wegenetz mindestens ein Schienennetz und mindestens ein Straßennetz umfasst,
wobei das mindestens eine Schienennetz und das mindestens eine Straßennetz mittels mindestens einer Verbindungsstelle miteinander gekoppelt sind,
wobei die mindestens eine Verbindungsstelle derart ausgestaltet ist, dass
- bi-modale Fahrzeuge von einem Schienennetz in ein Straßennetz wechseln können und ihre Geschwindigkeit so anpassen können, dass bei einem Wechsel eines bi-modalen Fahrzeugs von dem Schienennetz in das Straßennetz der laufende Verkehr auf dem Straßennetz nicht behindert wird,
und/oder
- bi-modale Fahrzeuge von einem Straßennetz in ein Schienennetz wechseln können und ihre Geschwindigkeit so anpassen können, dass bei einem Wechsel eines bi-modalen Fahrzeugs von dem Straßennetz in das Schienennetz der laufende Verkehr auf dem Schienennetz nicht behindert wird;
und
mindestens einen Wechselbereich, umfassend:
- ein Straßenstück, das zwischen zwei Schienen des Schienennetztes angeordnet ist, und
- zumindest eins von einem Straßenstück, das rechts der zwei Schienen angeordnet ist und einem Straßenstück, das links der zwei Schienen angeordnet ist,
wobei die Straßenstücke entlang der Schienen verlaufen, und
- einen ersten Abschnitt aufweisen, in dem die Fahrbahnen der Straßenstück zunächst unterhalb einer Schienenoberkante verlaufen, so dass Straßenräder bi-modaler Fahrzeuge die Fahrbahnen nicht berühren, und die Fahrbahnen der Straßenstücke, anschließend stetig auf die Höhe der Schienenoberkante ansteigen, so dass Straßenräder bi-modaler Fahrzeuge nach und nach in Kontakt mit den Fahrbahnen treten, wodurch die Schienenräder bi-modaler Fahrzeuge von den Schienen abgehoben werden und die Straßenräder bi-modaler Fahrzeuge die Spurführung von den Schienenrädern der bi-modalen Fahrzeuge übernehmen,
- einen zweiten Abschnitt aufweisen, in dem die Fahrbahnen der Straßenstücke auf Höhe der Schienenoberkante verlaufen, so dass die Fahrbahnen der Straßenstücke und die Schienenoberkanten eine durchgängige Fahrbahn bilden, auf der Fahrzeuge, wie zum Beispiel bi-modale Fahrzeuge, die Schiene überqueren können und ihre Richtung von der Richtung der Schienen, zum Beispiel in Richtung einer weiteren Schiene, wechseln können, und
- einen dritten Abschnitt aufweisen, in dem die Fahrbahnen der Straßenstücke zunächst auf Höhe der Schienenoberkante verlaufen, so dass Schienenräder bi-modaler Fahrzeuge die Fahrbahnen nicht berühren und die Fahrbahnen der Straßenstücke, anschließend stetig unterhalb der Schienenoberkante abfallen, so dass die Schienenräder nach und nach in Kontakt mit den Schienen treten, wodurch die Schienenräder die Spurführung von den Straßenrädern übernehmen, die Straßenräder von den Fahrbahnen abgehoben werden, und die bi-modalen Fahrzeuge auf die Schiene wechseln,
wobei der erste Abschnitt nahtlos mit dem zweiten Abschnitt und der zweite Abschnitt nahtlos mit dem dritten Abschnitt verbunden ist.

2. Bi-modales Verkehrssystem nach Anspruch 1,
wobei die Verbindungsstelle für einen Wechsel von bi-modalen Fahrzeugen von einem Schienennetz in ein Straßennetz umfasst:
- ein Straßenstück, das zwischen zwei Schienen des Schienennetztes angeordnet ist, und
- zumindest eins von einem Straßenstück, das rechts der zwei Schienen angeordnet ist und einem Straßenstück, das links der zwei Schienen angeordnet ist, wobei mindestens eines von dem rechts oder links angeordneten Straßenstücken mit einer Straße verbunden ist, und
wobei die Straßenstücke entlang den Schienen verlaufen, und derart ausgestaltet sind, dass
- die Fahrbahnen der Straßenstücke zunächst unterhalb einer Schienenoberkante verlaufen, so dass Straßenräder von bi-modaler Fahrzeuge die Fahrbahnen nicht berühren, und
- die Fahrbahnen der Straßenstücke anschließend stetig auf die Höhe der Schienenoberkante ansteigen, so dass die Straßenräder nach und nach in Kontakt mit den Fahrbahnen treten, wodurch die Schienenräder von den Schienen abgehoben werden, die Straßenräder die Spurführung von den Schienenräder übernehmen, die Fahrbahnen der Straßenstücke und die Schienenoberkanten eine durchgängige Fahrbahn bilden und die bi-modalen Fahrzeuge auf die Straße wechseln können;
und
wobei die Verbindungsstelle für einen Wechsel von bi-modalen Fahrzeugen von einem Straßennetz in ein Schienennetz umfasst:
- ein Straßenstück, das zwischen zwei Schienen des Schienennetzes angeordnet ist, und
- zumindest eins von einem Straßenstück, das rechts der zwei Schienen angeordnet ist und einem Straßenstück, das links der zwei Schienen angeordnet ist, wobei mindestens eines von dem rechts oder links angeordneten Straßenstücken mit einer Straße verbunden ist, und
wobei die Straßenstücken entlang den Schienen verlaufen, und derart ausgestaltet sind, dass
- die Fahrbahnen der Straßenstücke zunächst auf Höhe der Schienenoberkante verlaufen, so dass die Fahrbahnen der Straßenstücke und die Schienenoberkanten eine durchgängige Fahrbahn bilden, und die Schienenräder von bi-modalen Fahrzeuge die Fahrbahnen nicht berühren und,
- die Fahrbahnen der Straßenstücken anschließend stetig unterhalb der Schienenoberkante abfallen, so dass die Schienenräder nach und nach in Kontakt mit den Schienen treten, wodurch die Schienenräder die Spurführung von den Straßenrädern übernehmen, die Straßenräder komplett von den Fahrbahnen abgehoben werden, und die bi-modalen Fahrzeuge auf die Schiene wechseln.

3. Bi-modales Verkehrssystem nach einem der Ansprüche 1 bis 2, weiter umfassend:
ein Positioniersystem, zum Beispiel ein Lenkrad oder Führungssystem, mit dem das bi-modale Fahrzeug so auf der durchgängigen Fahrbahn über den Schienen positioniert wird, dass nach Absenken der Fahrbahnen der Straßenstücken die schienenräder auf den Schienen landen.

4. Bi-modales Verkehrssystem nach einem der Ansprüche 1 bis 3,
wobei die bi-modalen Fahrzeuge für Fahrten auf der Schiene Schienenräder und für Fahrten auf der Straße Straßenräder aufweisen, wobei die Schienenräder und die Straßenräder so angetrieben sind, dass sie die gleiche Umfangsgeschwindigkeit aufweisen.

5. Bi-modales Verkehrssystem nach einem der Ansprüche 1 bis 4,
wobei die bi-modalen Fahrzeuge so ausgestaltet sind, dass
- die Schienenräder bei einer Fahrt auf der Straße die Fahrbahn nicht berühren, zum Beispiel indem Achsen von Schienenrädern einen größeren Abstand zur Fahrbahn haben als Achsen von Straßenrädern, oder zum Beispiel indem die Schienenräder einen kleineren Durchmesser als die Straßenräder aufweisen, oder beides, und
- die Straßenräder bei einer Fahrt auf der Schiene die Schienen nicht berühren, zum Beispiel indem sie einen Durchmesser aufweisen, der klein genug ist, so dass die Straßenräder die Schienen oder Befestigungsteile der Schienen nicht berühren.

6. Bi-modales Verkehrssystem nach einem der Ansprüche 1 bis 5,
wobei die bi-modalen Fahrzeuge so ausgestaltet sind, dass die Spurweite der Schienenräder an die Spurweite eines jeweiligen Schienennetzes angepasst werden kann, insbesondere durch axiales Verschieben und anschließendes Fixieren der Schienenräder auf Achsen, an denen die Schienenräder befestigt sind, zum Beispiel während sich das bi-modale Fahrzeug auf einer Straße befindet oder bewegt.

7. Bi-modales Verkehrssystem nach einem der Ansprüche 1 bis 6,
wobei die bi-modalen Fahrzeuge einen Antriebsstrang besitzen, mit dem sie Schienenräder und Straßenräder gemeinsam antreiben können.

8. Bi-modales Verkehrssystem nach einem der Ansprüche 1 bis 7,
wobei die bi-modalen Fahrzeuge einen Antrieb aufweisen, der auf elektrifizierten Strecken des Schienennetzes mit Traktionsstrom, zum Beispiel über Schleifkontakte, betrieben wird und auf nicht-elektrifizierten Strecken des Schienennetzes und auf Straßen mit mobiler Energie, wie zum Beispiel einer Batterie, einem Akkumulator, einer Brennstoffzelle oder Diesel, betrieben wird,
wobei die Leistung des Antriebs bei einem Wechsel des Betriebs mit Traktionsstrom und mobiler Energie, zum Beispiel im Bereich von Verbindungsstellen oder Wechselbereichen, manuell oder automatisch, konstant gehalten wird.

9. Bi-modales Verkehrssystem nach einem der Ansprüche 1 bis 8,
wobei die bi-modalen Fahrzeuge für die Fahrzeugführung an Verbindungsstellen und Wechselbereichen neben einer manuellen Fahrzeugführung, zum Beispiel per Lenkrad, zusätzlich ein erstes und ein zweites Spurführungssystem, die zum Beispiel optisch oder mechanisch sind, aufweist, wobei das erste Spurführungssystem einer ersten Führungsmarkierung, die sich auf einer ersten Seite, zum Beispiel der linken Seite, des bi-modalen Fahrzeugs befindet, folgt und das zweite Spurführungssystem einer zweiten Führungsmarkierung, die sich auf einer zweiten Seite, zum Beispiel der rechten Seite, des bi-modalen Fahrzeugs befindet, folgt;
- wobei das erste und das zweite Spurführungssystem vor Erreichen einer Verbindungsstelle oder eines Wechselbereichs beide aktiviert werden,
- wobei bei einem Richtungswechsel auf die erste Seite das erste Spurführungssystem aktiviert wird und das zweite Spurführungssystem bis nach dem Richtungswechsel deaktiviert wird, und
- wobei bei einem Richtungswechsel auf die zweite Seite das zweite Spurführungssystem aktiviert wird und das erste Spurführungssystem bis nach dem Richtungswechsel deaktiviert wird.

10. Bi-modales Verkehrssystem nach Anspruch 9,
wobei die Aktivierung und Deaktivierung des ersten und zweiten Spurführungssystems manuell, zum Beispiel durch Betätigung des Blinkers oder Lenkrads, oder automatisch, zum Beispiel durch ein Navigationsgerät, erfolgt.

11. Bi-modales Verkehrssystem nach einem der Ansprüche 1 bis 10, weiter umfassend:
ein Verkehrsleit- und Sicherungs-System, an welches mindestens eins von
- einer Identität,
- einer Position,
- einer Geschwindigkeit, und
- einer Geschwindigkeitsänderung
von bi-modalen Fahrzeugen in regelmäßigen Abständen oder auf Abfrage übermittelt wird,
wobei das Verkehrsleit- und Sicherungs-System eingerichtet ist, mindestens eins von
- einem Sicherheitsabstand,
- eine Geschwindigkeitsdifferenz, und
- eine Geschwindigkeitsdifferenzveränderung
von einem bi-modalen Fahrzeug zu einem vorausfahrenden oder einem hinterher fahrenden Fahrzeug zu ermitteln und dies an das bi-modale Fahrzeug übermittelt.

12. Verfahren zum Koppeln eines Schienennetzes und eines Strassennetzes des bi-modalen Verkehrssystems nach Anspruch 1, so dass Fahrzeuge mit Schienenrädern und Straßenrädern zwischen dem Schienennetz und dem Straßennetz wechseln können, umfassend:
- Vorsehen von Straßenstücke, die entlang, zum Beispiel parallel zu Schienen des Schienennetzes verlaufen und auf die das Fahrzeug mit Straßenrädern fahren kann, wobei ein Straßenstück zwischen zwei Schienen des Schienennetztes angeordnet ist und zumindest ein Straßenstück rechts oder links der zwei Schienen angeordnet ist,
- Stetiges Anheben der Fahrbahnen der Straßenstücke, so dass bei einer Fahrt auf der Schiene allmählich die Last des Fahrzeugs von den Schienenrädern auf die Straßenräder übergeht, wobei
die Fahrbahnen der Straßenstücke soweit angehoben werden und so ausgestaltet, werden, dass eine durchgängige Fahrbahn aus Fahrbahnen von Straßenstücken und Schienenoberkanten entsteht und wobei das Fahrzeug die Schienen auf der durchgängigen Fahrbahn überqueren kann, und
- Stetiges Absenken der Fahrbahnen der Straßenstücke, so dass bei einer Fahrt auf den Straßenstücken allmählich die Last des Fahrzeugs von den Straßenrädern auf die Schienenräder übergeht.

13. Verfahren nach Anspruch 12, wobei das Fahrzeug sich auf der durchgängigen Fahrbahn so über den Schienen platziert, so dass es, wenn die Fahrbahnen der Straßenstücke abgesenkt werden, mit den Schienenrädern auf den Schienen fährt.

14. Verfahren nach einem der Ansprüche 12 bis 13, wobei
die Fahrbahnen der Straßenstücke soweit abgesenkt werden, dass die Straßenräder nicht mehr in Kontakt mit den Straßenstücken sind.

15. Verfahren nach einem der Ansprüche 12 bis 14, wobei eine Spurweite der Schienenräder an eine Spurweite des Schienennetzes angepasst wird, zum Beispiel durch axiales Verschieben und anschließendes Fixieren der Schienenräder, wobei die Anpassung zum Beispiel während der Fahrt auf der Straße oder während sich das Fahrzeug auf einer Straße befindet, stattfindet.

## Claims

1. Bi-modal traffic system, comprising:
an integrated path network for bi-modal vehicles, especially for bi-modal trucks,
- wherein the bi-modal vehicles are configured so that they run both on rail tracks as well as on road tracks,
- wherein the integrated path network comprises at least one rail network and one road network,
- wherein the at least one rail network and the at least one road network are coupled by at least one junction,
wherein the at least one junction is configured so that
- bi-modal vehicles may change from rail network to a road network and may adapt their speed so that a change of a bi-modal vehicle from the rail network into the road network does not impair the ongoing traffic on the road network,
and/or
- bi-modal vehicles may change from road network into a rail network and may adapt their speed so that a change of a bi-modal vehicle from the road network into the rail network does not impair the ongoing traffic on the rail network;
and
at least one change area, comprising:
- ane road section arranged between two rails of the rail network and
- at least one of a road section arranged to the right side of the two rails and a road section arranged to the left of two rails,
wherein the road sections run alongside the rails and
- comprise a first section, in which the road surfaces of the road sections first run below an upper rail-edge so that road wheels of bi-modal vehicles do not touch the road surfaces, and the road surfaces of the road sections then rise steadily up to the level of the upper rail-edge so that the road wheels of bi-modal vehicles little by little get into contact with the road surface, whereby the rail wheels of bi-modal vehicles are lifted off the rails and the road wheels of bi-modal vehicles take over track guiding from the rail wheels of the bi-modal vehicles,
- comprise a second section, in which the road surfaces of the road sections run at the level of the upper rail-edge so that the road surfaces of road sections and the upper rail-edges form a continuous driving surface on which vehicles, for example bi-modal vehicles, may cross the rail track by and may change their direction from the direction of the rail tracks, for example to the direction of a further rail track, and
- comprise a third section, in which the road surfaces of the road sections first run at the level of the upper rail-edge so that rail wheels of bi-modal vehicles do not touch the road surfaces and the road surfaces of the road sections are then lowered steadily below the upper rail-edge, so that the rail wheels little by little get into contact with the rails, whereby the rail wheels take over the track guiding from the road wheels, the road wheels are lifted off the road surfaces and the bi-modal vehicles change to the rail track,
wherein the first section is seamlessly connected with the second section and the second section is seamlessly connected with the third section.

2. Bi-modal traffic system according to claim 1,
wherein the junction for a change of bi-modal vehicles from a rail network to a road network comprises:
- a road section arranged between two rails of the rail network, and
- at least one of a road section arranged to the right of the two rails and a road section arranged to the left of the two rails, wherein at least one of the road sections arranged to the right or the left is connected with a road, and
wherein the road sections run alongside the rails and are configured in such a way that
- the road surfaces of road sections first run below an upper rail-edge so that road wheels of bi-modal vehicles do not touch the road surface, and
- the road surfaces of the road sections then rise steadily up to the level of the upper rail-edge so that the road wheels little by little get into contact with the road surfaces, whereby the rail wheels are lifted off the rails, the road wheels take over track guiding from the rail wheels, the road surfaces of the road sections and the upper rail-edges form a continuous driving surface and the bi-modal vehicles may change to the road,
and
wherein the junction for a change of bi-modal vehicles from a road network to a rail network comprises:
- a road section arranged between two rails of the rail network and
- at least one of a road section arranged to the right of the two rails and a road section arranged to the left of the two rails, wherein at least one of the road sections arranged to the right or left is connected to a road, and
wherein the road sections run alongside the rails and are configured in such a way that
- the road surfaces of road sections first run at the level of the upper rail-edge so that the road surfaces of the road sections and the upper rail-edges form a continuous driving surface, and the rail wheels of bi-modal vehicles do not touch the road surfaces, and
- the road surfaces of the road sections are then lowered steadily below the level of the upper rail-edge so that the rail wheels little by little get into contact with the rails, the rail wheels take over track guiding from the road wheels, the road wheels are completely lifted off the road surfaces, and the bi-modal vehicles change to the rail.

3. Bi-modal traffic system according to one of claims 1 to 2, further comprising:
a positioning system, for example a steering wheel or a guidance system, for positioning the bi-modal vehicle on the continuous driving surface over the rails in such a way that the rail wheels land on the rails after lowering the road surfaces section of road sections.

4. Bi-modal traffic system according to one of claims 1 to 3,
wherein the bi-modal vehicles comprise rail wheels for driving on the rails and road wheels for driving on the road, wherein the rail wheels and the road wheels are driven in such a way that their circumferential speeds are the same.

5. Bi-modal traffic system according to one of claims 1 to 4,
wherein the bi-modal vehicles are configured so that
- the rail wheels do not touch the road surface when driving on the road, for example by axles of rail wheels being further away from the road surface than axles of road wheels, or, for example, by the rail wheels having a smaller diameter than the road wheels, or both, and
- the road wheels do not touch the rails when driving on rails, for example by having a diameter that is small enough so that the road wheels do not touch the rails or fixing parts of the rails.

6. Bi-modal traffic system according to one of claims 1 to 5.
wherein the bi-modal vehicles are configured so that the track gauge of the rail wheels can be adapted to the track gauge of a respective rail network, especially by axial shifting and subsequent fixation of the rail wheels on the axles on which the rail wheels are mounted, for example, while the bi-modal vehicle is on or moves on a road.

7. Bi-modal traffic system according to one of claims 1 to 6,
wherein the bi-modal vehicles comprise a power train for jointly driving rail wheels and road wheels.

8. Bi-modal traffic system according to one of claims 1 to 7,
wherein the bi-modal vehicles comprise a drive which is operated with traction current on electrified sections of the rail network, for example by sliding contacts, and is operated on non-electrified sections of the rail network and on roads with mobile energy, for example a battery, an accumulator, a fuel cell or diesel,
wherein the power of the drive is manually or automatically kept constant when changing between operating with traction current and mobile energy, for example near junctions or change areas.

9. Bi-modal traffic system according to one of claims 1 to 8,
wherein the bi-modal vehicles comprise for vehicle control at junctions or change areas besides a manual vehicle control, for example using a steering wheel, additionally a first and a second track guidance system, which may for example be optical or mechanical, wherein the first track guidance system follows a first guide marker arranged on a first side, for example the left side, of the bi-modal vehicle and the second track guidance system follows a second guide marker arranged on a second side, for example the right side, of the bi-modal vehicle;
- wherein the first and the second track guidance systems are both activated before reaching a junction or a change area,
- wherein when changing direction to the first side, the first track guidance system is activated and the second track guidance system is deactivated until after the change of direction, and
- wherein when changing direction to the second side, the second track guidance system is activated and the first track guidance system is deactivated until after the change of direction.

10. Bi-modal traffic system according to claim 9.
wherein the activation and deactivation of the first and second track guidance systems is controlled manually, for example by operating a direction indicator or a steering wheel, or automatically, for example by a navigation device.

11. Bi-modal traffic system according to one of claims 1 to 10, further comprising:
a traffic management and safety system to which at least one of
- an identity,
- a position,
- a speed, and
- a change of speed
of bi-modal vehicles is transmitted in regular intervals or by interrogation,
wherein the traffic management and safety system is configured to determine at least one of
- a safety distance,
- a speed difference, and
- a change in speed difference
of a bi-modal vehicle to a bi-modal vehicle ahead or behind and to transmit this to the bi-modal vehicle.

12. Method for coupling a rail network and a road network of the bi-modal traffic system according to claim 1, such that vehicles with rail wheels and road wheels can change between the rail network and the road network, comprising:
- providing road sections running, for example, in parallel along rails of the rail network and on which the vehicle can drive using road wheels, wherein a road section is arranged between two rails of the rail network and at least one road section is arranged to the left or the right of the two rails,
- steady raising of the road surfaces of the road sections so that the load of the vehicle is gradually transferred from the rail wheels to the road wheels while driving on the rails, wherein the road surfaces of the road sections are raised far enough and are configured to form a continuous driving surface of road surfaces of road sections and rail upper-edges and wherein the vehicle can cross the rails on the continuous driving surface, and
- steady lowering of road surfaces of the road sections, so that the load of the vehicle is transferred gradually from the road wheels to the rail wheels while driving on the road sections.

13. Method according to claim 12,
wherein the vehicle positions itself on the continuous driving surface over the rails in such a way that it drives on the rails using rail wheels when the road surfaces of the road sections are lowered.

14. Method according to one of claims 12 to 13,
wherein the road surfaces of the road sections are lowered far enough so that the road wheels are no longer in contact with the road sections.

15. Method according to one of claims 12 to 14,
wherein a track gauge of the rail wheels is adapted to a track gauge of the rail network, for example by axially shifting and subsequent fixation of the rail wheels, wherein the adaptation takes place, for example while driving on the road or when the vehicle is on a road.

## Revendications

1. Système de transport bimodal, comprenant :
un réseau intégré de voies pour véhicules bimodaux, en particulier les poids-lourds bimodaux,
- dans lequel les véhicules bimodaux sont conçus de telle sorte qu'ils peuvent circuler à la fois sur rails et sur routes,
- dans lequel le réseau intégré de voies comprend au moins un réseau ferroviaire et au moins un réseau routier,
dans lequel au moins un réseau de chemin de fer et au moins un réseau routier sont reliés entre eux par au moins un point de jonction,
dans lequel au moins un point de jonction est conçu de telle sorte que
- les véhicules bimodaux puissent passer d'un réseau ferré à un réseau routier et que leur vitesse puisse être ajustée de telle manière que, lorsqu'un véhicule bimodal passe du réseau ferré au réseau routier, la circulation sur le réseau routier ne soit pas gênée, et/ou
- les véhicules bimodaux puissent passer d'un réseau routier à un réseau ferré et que leur vitesse puisse être ajustée de telle manière que, lorsqu'un véhicule bimodal passe du réseau routier au réseau ferré, la circulation sur le réseau ferré ne soit pas gênée ;
et
au moins une zone de changement comprenant :
- un tronçon de route disposé entre deux rails du réseau ferré, et
- au moins un des tronçons de route positionné à droite des deux rails et un tronçon de route disposé à gauche des deux rails,
dans lequel les tronçons de route passent le long des rails, et
- qui comporte une première section, dans laquelle les voies des tronçons routiers passent, dans un premier temps, en-dessous d'une arête supérieure des rails, afin que les roues pour route des véhicules bimodaux ne touchent pas les voies et que les voies des tronçons routiers puissent ensuite monter constamment sur la hauteur de l'arête supérieure des rails, afin que les roues pour route des véhicules bimodaux entrent peu à peu en contact avec les voies, de telle sorte que les roues ferroviaires des véhicules bimodaux soient soulevées et que les roues pour route des véhicules bimodaux, prennent en charge le système de guidage des roues ferroviaires des véhicules bimodaux,
- qui comporte une deuxième section, dans laquelle les voies des tronçons routiers passent, dans un premier temps, sur la hauteur de l'arête supérieure des rails, afin que les voies des tronçons routiers et les arêtes supérieures des rails forment une voie continue, sur laquelle les véhicules, comme par exemple les véhicules bimodaux, peuvent traverser les rails et modifier leur direction et la différencier de la direction des rails, par exemple en la mettant dans la direction de rails situés plus loin, et
- qui comporte une troisième section, dans laquelle les voies des tronçons routiers passent, dans un premier temps, sur la hauteur de l'arête supérieure des rails, afin que les roues ferroviaires des véhicules bimodaux ne touchent pas les voies et que les voies des tronçons routiers puissent descendre ensuite constamment en-dessous de l'arête supérieure des rails, afin que les roues ferroviaires entrent peu à peu en contact avec les rails, de telle sorte que les roues ferroviaires prennent en charge le système de guidage des roues pour route, que les roues pour route soient soulevées des voies et que les véhicules bimodaux passent sur les rails,
dans lequel la première section est directement connectée à la deuxième section, et la deuxième section est directement reliée à la troisième section.

2. Système de transport bimodal selon la revendication 1,
dans lequel le point de jonction par lequel les véhicules bimodaux, passent du réseau ferré à un réseau routier comprend :
- un tronçon de route disposé entre deux rails du réseau ferré, et
- au moins un des tronçons de route positionné à droite des deux rails et un tronçon de route disposé à gauche des deux rails, où au moins un des tronçons de route disposé sur la droite ou la gauche est relié à une route, et
où les tronçons de route s'étendent le long des rails et sont conçus de telle sorte que
- les voies des tronçons routiers passent, dans un premier temps, en-dessous d'une arête supérieure des rails, afin que les roues pour route des véhicules bimodaux ne touchent pas les voies, et
- les voies des tronçons routiers puissent monter ensuite constamment sur la hauteur de l'arête supérieure des rails, afin que les roues pour route des véhicules bimodaux entrent peu à peu en contact avec les voies, de telle sorte que les roues ferroviaires des véhicules bimodaux soient soulevées, que les roues pour route des véhicules bimodaux prennent en charge le système de guidage des roues ferroviaires, que les voies des tronçons routiers et l'arête supérieure des rails forment une voie continue et que les véhicules bimodaux puissent passer sur la route ;
et
où le point de jonction pour le passage des véhicules bimodaux d'un réseau routier à un réseau ferré comprend :
- un tronçon de route disposé entre deux rails du réseau ferré, et
- au moins un des tronçons de route positionné à droite des deux rails et un tronçon de route disposé à gauche des deux rails, où au moins un des tronçons de route disposé sur la droite ou la gauche est relié à une route, et
où les tronçons de route s'étendent le long des rails et sont conçus de telle sorte que
- les voies des tronçons routiers passent, dans un premier temps, sur la hauteur de l'arête supérieure des rails, afin que les voies des tronçons routiers et les arêtes supérieures des rails forment une voie continue, et que les roues ferroviaires des véhicules bimodaux ne touchent pas les voies, et
- les voies des tronçons routiers puissent descendre ensuite constamment en dessous de l'arête supérieure des rails, afin que les roues ferroviaires des véhicules bimodaux entrent peu à peu en contact avec les rails, de telle sorte que les roues ferroviaires prennent en charge le système de guidage des roues pour route, que les roues pour route se soulèvent entièrement des voies, et que les véhicules bimodaux passent sur les rails.

3. Système de transport bimodal selon l'une des revendications 1 à 2, comprenant en outre :
un système de positionnement, par exemple un volant ou un système de guidage, avec lequel le véhicule bimodal sera positionné sur la voie continue, sur les rails, de telle manière que les roues ferroviaires se posent sur les rails après l'abaissement des voies des tronçons de route.

4. Système de transport bimodal selon l'une des revendications 1 à 3,
dans lequel les véhicules bimodaux comportent des roues ferroviaires pour la circulation sur rails et des roues pour route pour la circulation sur routes, où les roues ferroviaires et les roues pour route sont entraînées de telle sorte qu'elles présentent la même vitesse circonférentielle,

5. Système de transport bimodal selon l'une des revendications 1 à 4,
dans lequel les véhicules bimodaux sont conçus de telle sorte que
- les roues ferroviaires ne touchent pas la voie lors d'une circulation sur route, par exemple lorsque les axes des roues ferroviaires sont plus éloignés de la voie que les axes des roues pour route, ou par exemple lorsque les roues ferroviaires sont d'un diamètre inférieur à celui des roues pour route, ou les deux, et
- les roues pour route ne touchent pas la voie lors d'une circulation sur rails, par exemple lorsque les roues sont d'un diamètre suffisamment petit pour que les roues pour route ne touchent pas les rails ou les éléments de fixation des rails.

6. Système de transport bimodal selon l'une des revendications 1 à 5,
dans lequel les véhicules bimodaux sont conçus de telle sorte que la largeur des roues ferroviaires puisse être adaptée à l'écartement des voies du réseau ferroviaire correspondant, en particulier par le biais du déplacement axial et de la fixation ultérieure des roues ferroviaires sur les axes sur lesquels les roues ferroviaires sont fixées, par exemple lorsque le véhicule bimodal se trouve ou se déplace sur une route.

7. Système de transport bimodal selon l'une des revendications 1 à 6,
dans lequel les véhicules bimodaux possèdent un train d'entraînement avec lequel ils peuvent entraîner simultanément les roues ferroviaires et les roues pour route.

8. Système de transport bimodal selon l'une des revendications 1 à 7,
dans lequel les véhicules bimodaux comportent un entraînement fonctionnant par traction électrique, par exemple par contact glissant, sur les tronçons électrifiés du réseau ferroviaire, et qui fonctionne sur les tronçons non électrifiés du réseau ferroviaire et sur les routes à l'aide d'énergie mobile, comme par exemple, une batterie, un accumulateur, une pile à combustible ou du diesel,
dans lequel la puissance de l'entraînement, lors d'un changement de l'opération avec traction électrique et énergie mobile, par exemple dans la zone des points de jonction ou des zones de changement, est constamment maintenue, manuellement ou automatiquement.

9. Système de transport bimodal selon l'une des revendications 1 à 8,
dans lequel les véhicules bimodaux comportent en outre, pour le guidage du véhicule aux points de jonction et aux zones de changement, à côté d'un système de guidage du véhicule manuel, par exemple grâce à un volant, un premier et un second système de guidage, pouvant être par exemple optiques ou mécaniques, où le premier système de guidage suit un premier repère de guidage, qui se situe sur un premier côté, par exemple le côté gauche, du véhicule bimodal, et le second système de guidage suit un second repère de guidage, qui se situe sur un second côté, par exemple le côté droit du véhicule bimodal :
- dans lequel les premier et second systèmes de guidage avant d'atteindre un point de jonction ou une zone de changement sont tous deux activés.
- dans lequel, lors d'un changement de direction sur le premier côté, le premier système de guidage est activé et le second système de guidage est désactivé jusqu'à ce que le changement de direction soit effectué, et
- dans lequel, lors d'un changement de direction sur le second côté, le second système de guidage est activé et le premier système de guidage est désactivé jusqu'à ce que le changement de direction soit effectué.

10. Système de transport bimodal selon la revendication 9,
dans lequel l'activation et la désactivation des premier et second systèmes de guidage s'effectue manuellement, par exemple par le biais de l'actionnement du clignotant ou du volant, ou automatiquement, par exemple en faisant fonctionner le système de navigation.

11. Système de transport bimodal selon l'une des revendications 1 à 10, comprenant en outre :
un système de régulation du trafic et de sauvegarde, auquel au moins un des éléments suivants :
- identité.
- position.
- vitesse et
- changement de vitesse
est transmis par les véhicules bimodaux à intervalles réguliers ou sur demande,
dans lequel le système de régulation du trafic et de sauvegarde est établi, et au moins un des éléments suivants :
- distance de sécurité,
- différence de vitesse, et
- changement de différence de vitesse
d'un véhicule bimodal à un véhicule circulant devant ou derrière doit être déterminé et
transmis au véhicule bimodal.

12. Procédé de liaison d'un réseau ferroviaire et d'un réseau routier du système de transport bimodal selon la revendication 1, afin que les véhicules à roues ferroviaires et à roues pour route puissent alterner entre le réseau ferroviaire et le réseau routier, comprenant :
- la planification de tronçons routiers qui s'étendent le long des rails du réseau ferroviaire, par exemple parallèlement à elles, et sur lesquels le véhicule peut rouler avec des roues pour route, où un tronçon de route est positionné entre deux rails du réseau ferroviaire et au moins un tronçon à droite ou à gauche des deux rails est positionné,
- le levage constant des voies des tronçons de route afin que, lors de la circulation sur rails, le poids du véhicule passe progressivement des roues ferroviaires aux roues pour route, où les voies des tronçons de route sont levées et configurées de telle sorte qu'une voie continue se forme à partir des voies des tronçons de route et des arêtes supérieures des rails, et où le véhicule peut traverser les rails sur la voie continue, et
- abaissement constant des voies des tronçons de route, afin que, lors de la circulation sur les tronçons routiers, le poids du véhicule passe progressivement des roues pour route aux roues ferroviaires.

13. Procédé selon la revendication 12, dans lequel
le véhicule se place sur la voie continue au-dessus des rails, de telle sorte que, lorsque les voies des tronçons de route sont abaissées, il circule avec les roues ferroviaires sur les rails.

14. Procédé selon l'une des revendications 12 à 13, dans lequel
les voies des tronçons de route sont abaissées de sorte que les roues pour route ne soient plus en contact avec les tronçons de route.

15. Procédé selon l'un des revendications 12 à 14, dans lequel la largeur des roues ferroviaires peut être adaptée à l'écartement des voies du réseau ferroviaire, par exemple par le biais du déplacement axial et de la fixation ultérieure des roues ferroviaires, où l'ajustement a lieu, par exemple lors de la circulation sur route ou lorsque le véhicule bimodal se trouve ou se déplace sur une route.
